# EUROPEAN PATENT APPLICATION

(11) **EP 4 564 386 A2**
(43) Date of publication of application: **04.06.2025**
(21) Application number: 24209171.8
(22) Date of filing: 28.10.2024
(51) Int. Cl.: H01G 4/12, H01G 4/224, H01G 4/30

(54) **A MULTILAYER CERAMIC ELECTRONIC COMPONENT (MLCC) CONTAINING BARIUM, TITANIUM AND CARBON FIBRES IN THE SURFACE LAYERS**

(30) Priority: 01.12.2023 KR 20230172688
(71) Applicant: Samsung Electro-Mechanics Co., Ltd., Suwon-si, Gyeonggi-do (KR)
(72) Inventor: Yu, Ji Hye, Suwon-si, Gyeonggi-do (KR)
(74) Representative: Grünecker Patent- und Rechtsanwälte PartG mbB

(57) **Abstract**

A multilayer electronic component (100) comprising:

a body (110) including first and second internal electrodes (121, 122) alternately disposed in a first direction (T) with a dielectric layer (111) interposed therebetween and including first (1) and second (2) surfaces facing each other in the first direction (T), third (3) and fourth (4) surfaces connected to the first (1) and second (2) surfaces and facing each other in a second direction (L), and fifth (5) and sixth (6) surfaces connected to the first to fourth (1-4) surfaces and facing each other in a third direction (W); and external electrodes (131, 132) disposed on the third (3) and fourth (4) surfaces, respectively, wherein:

- the body (110) includes a capacitance formation portion (Ac) in which the first and second internal electrodes (121, 122) overlap in the first direction (T) and cover portions (112, 113) disposed on an upper surface and a lower surface of the capacitance formation portion (Ac) in the first direction (T), respectively, and

- the cover portions include Ba, Ti, and carbon fiber. Further, the carbon fiber includes one or more of single-walled carbon nanotubes (SWCNT) and multi-walled carbon nanotubes (MWCNT).

## Description

### CROSS-REFERENCE TO RELATED APPLICATION(S)

This application claims benefit of priority to Korean Patent Application No. 10-2023-0172688 filed on December 01, 2023 in the Korean Intellectual Property Office, the disclosure of which is incorporated herein by reference in its entirety.

### TECHNICAL FIELD

The present disclosure relates to a multilayer electronic component.

Multilayer ceramic capacitors (MLCCs), as multilayer electronic components, are chip-type condensers mounted on the printed circuit boards of various types of electronic products including display devices, such as liquid crystal displays (LCDs) and plasma display panels (PDPs), computers, smartphones, cell phones, and the like, to charge or discharge electricity.

Multilayer ceramic capacitors may be used as components in various electronic devices due to the small size, high capacity, and ease of mounting thereof. As various electronic devices, such as computers and mobile devices, have become smaller and have higher output, demand for miniaturization and high capacity for multilayer ceramic capacitors has increased.

In the past, various attempts have been made to improve bending strength of multilayer electronic components. For example, there is a method of introducing a conductive resin layer into external electrodes. However, when a conductive resin is introduced into external electrodes, a side effect of increasing the equivalent series resistance (ESR) of multilayer electronic components may occur compared to a sintered electrode or a plated electrode.

Therefore, there is a need for structural improvements that may improve the bending strength of multilayer electronic components without special side effects.

### SUMMARY

An aspect of the present disclosure is to improve bending strength of a multilayer electronic component.

Another aspect of the present disclosure is to prevent cracks occurring in a cover portion from propagating to a capacitance formation portion.

Another aspect of the present disclosure is to suppress a side effect of increasing ESR in the process of improving bending strength of a multilayer electronic component.

However, the object of the present disclosure is not limited to the above-described contents and may be more easily understood in the process of describing specific exemplary embodiments of the present disclosure.

According to an aspect of the present disclosure, a multilayer electronic component includes a body including first and second internal electrodes alternately disposed in a first direction with a dielectric layer interposed therebetween and including first and second surfaces facing each other in the first direction, third and fourth surfaces connected to the first and second surfaces and facing each other in a second direction, and fifth and sixth surfaces connected to the first to fourth surfaces and facing each other in a third direction; and external electrodes disposed on the third and fourth surfaces. The body includes a capacitance formation portion in which the first and second internal electrodes overlap in the first direction and cover portions disposed on an upper surface and a lower surface of the capacitance formation portion in the first direction, and the cover portions include Ba, Ti, and carbon fiber.

According to an aspect of the present disclosure, a multilayer electronic component includes a body including first and second internal electrodes alternately disposed in a first direction with a dielectric layer interposed therebetween and including first and second surfaces facing each other in the first direction, third and fourth surfaces connected to the first and second surfaces and facing each other in a second direction, and fifth and sixth surfaces connected to the first to fourth surfaces and facing each other in a third direction; and external electrodes disposed on the third and fourth surfaces, respectively. The body includes a capacitance formation portion in which the first and second internal electrodes overlap in the first direction, and margin portions disposed on one surface and a side surface of the capacity formation portion in the third direction, respectively, and the margin portion includes Ba, Ti, and carbon fiber.

### BRIEF DESCRIPTION OF DRAWINGS

The above and other aspects, features, and advantages of the present disclosure will be more clearly understood from the following detailed description, taken in conjunction with the accompanying drawings, in which:
FIG. 1 is a perspective view schematically illustrating a multilayer electronic component according to an exemplary embodiment in the present disclosure;
FIG. 2 is a schematic cross-sectional view taken along line I-I' of FIG. 1;
FIG. 3 is a schematic cross-sectional view taken along line III-III' of FIG. 1;
FIG. 4 is a schematic cross-sectional view taken along line II-II' of FIG. 1;
FIG. 5 is an enlarged view of region P in FIG. 2;
FIGS. 6A and 6B schematically illustrate a shape of carbon fiber according to an exemplary embodiment; and
FIG. 7 is an exploded perspective view schematically illustrating a body according to an exemplary embodiment.

### DETAILED DESCRIPTION

Hereinafter, exemplary embodiments of the present inventive concept will be described in detail with reference to the accompanying drawings. The inventive concept may, however, be exemplified in many different forms and should not be construed as being limited to the specific exemplary embodiments set forth herein. Rather, these exemplary embodiments are provided so that this disclosure will be thorough and complete, and will fully convey the scope of the inventive concept to those skilled in the art. In the drawings, the shapes and dimensions of elements may be exaggerated for clarity, and the same reference numerals will be used throughout to designate the same or like elements.

To clarify the present disclosure, portions irrespective of description are omitted and like numbers refer to like elements throughout the specification, and in the drawings, the thickness of layers, films, panels, regions, etc., are exaggerated for clarity. Also, in the drawings, like reference numerals refer to like elements although they are illustrated in different drawings. Throughout the specification, unless explicitly described to the contrary, the word "comprise" and variations, such as "comprises" or "comprising", will be understood to imply the inclusion of stated elements but not the exclusion of any other elements.

In the drawings, a first direction may be defined as a stacking direction or thickness (T) direction, a second direction may be defined as a length (L) direction, and a third direction may be defined as a width (W) direction.

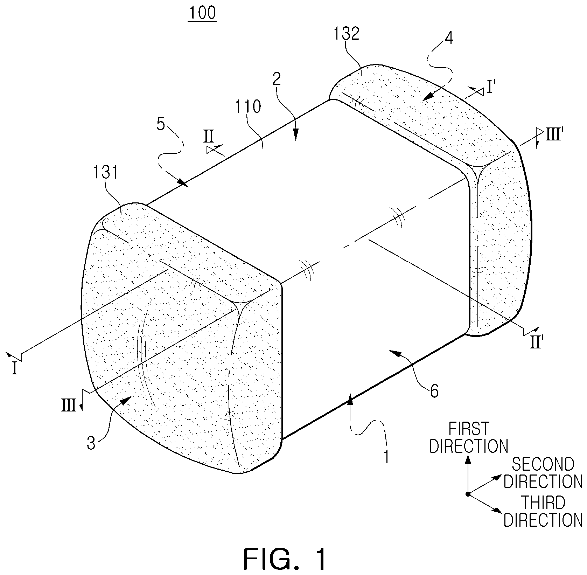

FIG. 1 is a perspective view schematically illustrating a multilayer electronic component according to an exemplary embodiment in the present disclosure.

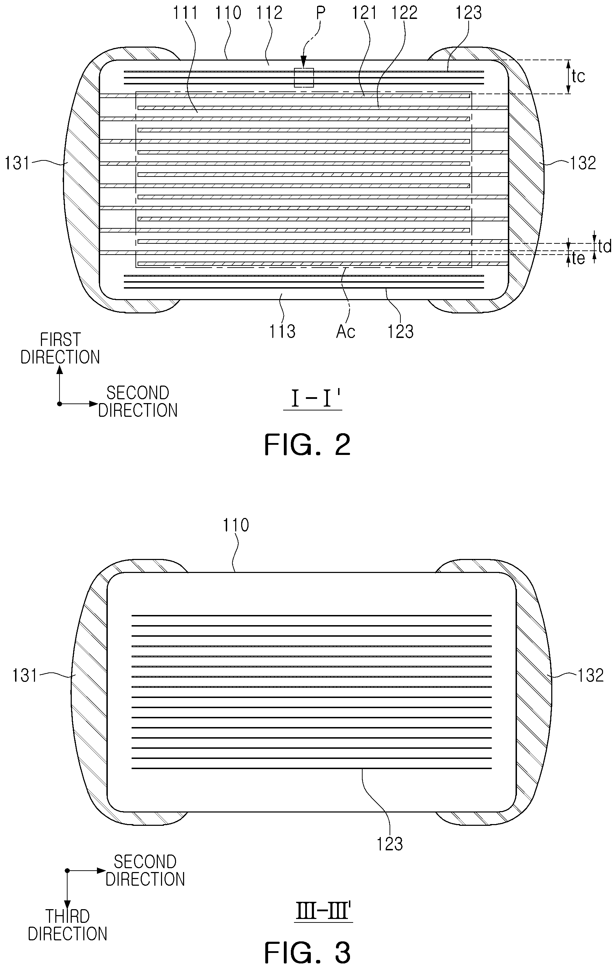

FIG. 2 is a schematic cross-sectional view taken along line I-I' of FIG. 1.

FIG. 3 is a schematic cross-sectional view taken along line III-III' of FIG. 1.

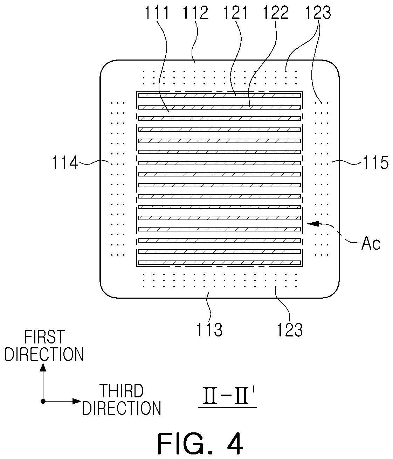

FIG. 4 is a schematic cross-sectional view taken along line II-II' of FIG. 1.

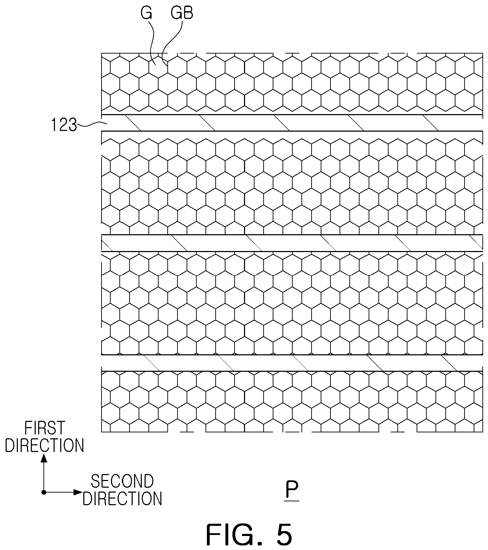

FIG. 5 is an enlarged view of region P in FIG. 2.

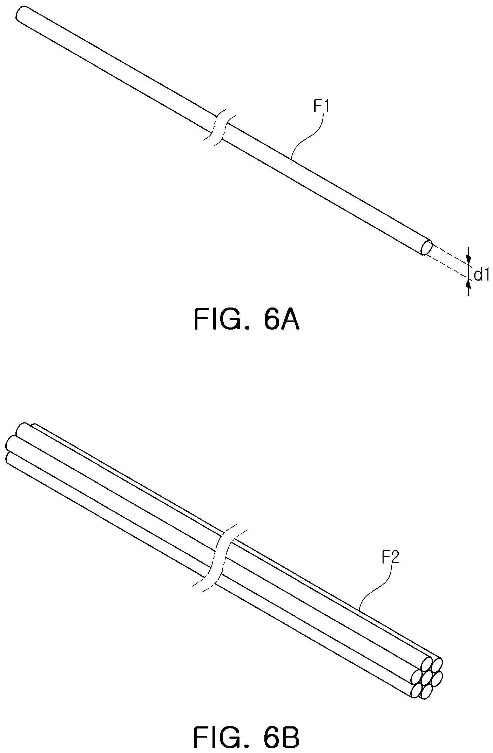

FIGS. 6A and 6B schematically illustrate a shape of carbon fiber according to an exemplary embodiment.

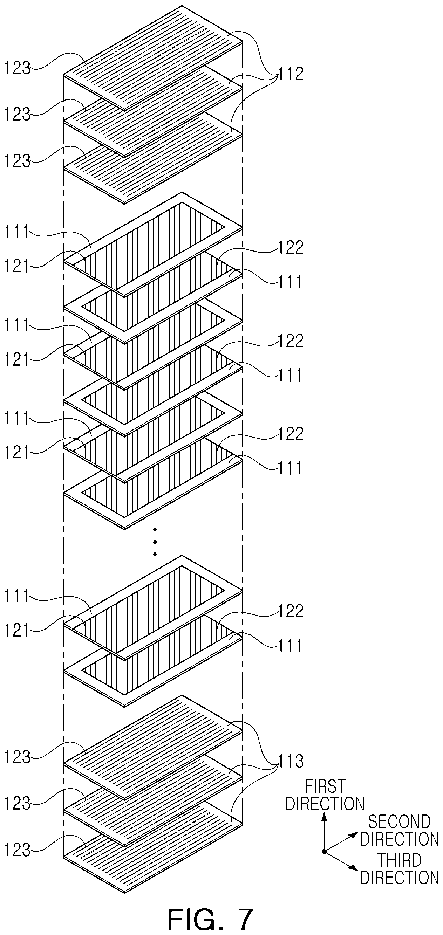

FIG. 7 is an exploded perspective view schematically illustrating a body according to an exemplary embodiment.

Hereinafter, a multilayer electronic component 100 according to an exemplary embodiment in the present disclosure will be described in detail with reference to FIGS. 1 to 7. In addition, a multilayer ceramic capacitor (hereinafter referred to as 'MLCC') is described as an example of a multilayer electronic component, but the present disclosure is not limited thereto.

The multilayer electronic component 100 according to an exemplary embodiment in the present disclosure may include a body 110 including first and second internal electrodes 121 and 122 alternately disposed in a first direction with a dielectric layer 111 therebetween and including first and second surfaces 1 and 2 facing each other in the first direction, third and fourth surfaces 3 and 4 connected to the first and second surfaces 1 and 2 and facing each other in a second direction, and fifth and sixth surfaces 5 and 6 connected to the first to fourth surfaces 1 to 4 and facing each other in a third direction; and external electrodes 131 and 132 disposed on the third and fourth surfaces 3 and 4. The body 110 may include a capacitance formation portion Ac in which the first and second internal electrodes 121 and 122 overlap in the first direction and cover portions 112 and 113 disposed on one surface and the other surface of the capacitance formation portion in the first direction and the cover portion may include Ba, Ti, and carbon fiber 123.

Hereinafter, each component included in the multilayer electronic component 100 according to an exemplary embodiment in the present disclosure will be described.

In the body 110, the dielectric layer 111 and the internal electrodes 121 and 122 may be alternately stacked.

There is no particular limitation on the specific shape of the body 110, but as shown, the body 110 may have a hexahedral shape or a similar shape. Due to shrinkage of the ceramic powder included in the body 110 during a sintering process, the body 110 may not have a hexahedral shape with perfectly straight lines, but may have a substantially hexahedral shape.

The body 110 may include first and second surfaces 1 and 2 facing each other in the first direction, third and fourth surfaces 3 and 4 connected to the first and second surfaces 1 and 2 and facing each other in the second direction, and fifth and sixth surfaces 5 and 6 connected to the first and second surfaces 1 and 2 and connected to the third and fourth surfaces 3 and 4, and facing each other in the third direction.

As a margin region in which the internal electrodes 121 and 122 are not disposed overlaps on the dielectric layer 111, a step due to a thickness of the internal electrodes 121 and 122 occurs, so that a corner connecting the first surface 1 and the third to fifth surfaces 3 to 5 and/or a corner connecting the second surface 2 and the third to fifth surfaces 3 to 5 may be shrunken toward the center of the body 110 in the first direction based on the first surface 1 or the second surface 2. Alternatively, due to shrinkage behavior during the sintering process of the body, a corner connecting the first surface 1 to the third to sixth surfaces 3, 4, 5, and 6 and/or a corner connecting the second surface 2 to the third to sixth surfaces 3, 4, 5, and 6 may be shrunken toward the center of the body 110 in the first direction based on the first surface 1 or the second surface 2. Alternatively, in order to prevent a chipping defect, the corners connecting each surface of the body 110 may be rounded by performing a separate process, so that the corners connecting the first surface 1 to the third to sixth surfaces 3 to 6 and/or the corners connecting the second surface 2 to the third to sixth surfaces 3 to 6 may be rounded.

The plurality of dielectric layers 111 forming the body 110 are in a fired state, and boundaries between adjacent dielectric layers 111 may be integrated to the extent that it is difficult to check the boundary without using a scanning electron microscope (SEM). The number of stacked dielectric layers 111 is not particularly limited and may be determined considering the size of the multilayer electronic component. For example, the body 110 may be formed by stacking 400 or more dielectric layers 111.

The dielectric layer 111 may be formed by preparing a ceramic slurry including ceramic powder, an organic solvent, and a binder, applying and drying the slurry on a carrier film to prepare a ceramic green sheet, and then sintering the ceramic green sheet. The ceramic powder is not particularly limited as long as sufficient capacitance may be obtained, but for example, barium titanate (BaTiO₃) -based powder may be used as the ceramic powder. For a more specific example, the ceramic powder may be barium titanate (BaTiO₃)-based powder, paraelectric powder based on CaZrO₃, etc. For a more specific example, barium titanate (BaTiO₃)-based powder may be one or more of BaTiO₃, (Ba₁₋ₓCaₓ) TiO₃ (0<x<1), Ba(Ti_{1-y}Ca_{y})O3 (0<y<1), (Ba₁₋ₓCaₓ) (Ti_{1-y}Zr_{y})O₃ (0<x<1, 0<y<1), and Ba(Ti_{1-y}Zr_{y})O₃ (0<y<1), and paraelectric powder based on CaZrO₃ may be (Ca₁₋ₓSrₓ) (Zr_{1-y}Ti_{y})O₃ (0<x<1, 0<y<1) .

Therefore, the dielectric layer 111 may include one or more of BaTiO₃, (Ba₁₋ₓCaₓ) TiO₃ (0<x<1), Ba(Ti_{1-y}Ca_{y})O3 (0<y<1), (Ba₁₋ₓCaₓ) (Ti_{1-y}Zr_{y})O₃ (0<x<1, 0<y<1), Ba(Ti_{1-y}Zr_{y})O₃ (0<y<1), and (Ca₁₋ₓSrₓ) (Zr_{1-y}Ti_{y})O₃ (0<x<1, 0<y<1).

An average thickness td of the dielectric layer 111 is not particularly limited.

For the purpose of miniaturization and high capacitance of the multilayer electronic component 100, the average thickness td of the dielectric layer 111 may be 0.35 um or less, and to improve the reliability of the multilayer electronic component 100 under high temperature and high pressure, the average thickness of the dielectric layer 111 may be 3 um or more.

The average thickness td of the dielectric layer 111 may be measured by scanning an image of a cross-section (L-T cross-section) of the body 110 in the third and first directions with a scanning electron microscope (SEM).

For example, as for the average thickness td of the dielectric layer 111, with respect to a total of five dielectric layers including two upper layers and two lower layers based on one dielectric layer at a point at which a central line of the body in the length direction and a central line of the body in the thickness direction meet among dielectric layers extracted from an image obtained by scanning a cross-section in the length and thickness directions (L-T) cut at a central portion of the body 110 in the width direction with a scanning electron microscope (SEM), five points including two left points and two right points centered on one reference point at equal intervals are determined based on a point at which the central line of the body in the length direction and the central line of the body in the thickness direction meet, and then thickness at each point may be measured to measure an average value.

The body 110 may include a capacitance formation portion Ac disposed inside the body 110 and forming capacitance by including the first internal electrode 121 and the second internal electrode 122 disposed to face each other with the dielectric layer 111 therebetween and cover portions 112 and 113 formed above and below the capacitance formation portion Ac in the first direction.

The capacitance formation portion Ac is a portion contributing to the formation of capacitance of the capacitor and may be formed by repeatedly stacking a plurality of first and second internal electrodes 121 and 122 with the dielectric layer 111 interposed therebetween. In addition, the first internal electrode 121 may be disposed at the top of the capacitance formation portion Ac in the first direction, and the second internal electrode 122 may be disposed at the bottom of the capacitance formation portion Ac in the first direction.

The internal electrodes 121 and 122 may include first and second internal electrodes 121 and 122. The first and second internal electrodes 121 and 122 may be alternately disposed to face each other with the dielectric layer 111 constituting the body 110 interposed therebetween and may be respectively exposed to the third and fourth surfaces 3 and 4 of the body 110.

The first internal electrode 121 may be spaced apart from the fourth surface 4 and may be exposed to the third surface 3, and the second internal electrode 122 may be spaced apart from the third surface 3 and may be exposed to the fourth surface 4. A first external electrode 131 may be disposed on the third surface 3 of the body 110 and connected to the first internal electrode 121, and a second external electrode 132 may be disposed on the fourth surface 4 of the body 110 and connected to the second internal electrode 122.

That is, the first internal electrode 121 is not connected to the second external electrode 132 but is connected to the first external electrode 131, and the second internal electrode 122 is not connected to the first external electrode 131 but is connected to the second external electrode 132. Accordingly, the first internal electrode 121 may be formed to be spaced apart from the fourth surface 4 by a predetermined distance, and the second internal electrode 122 may be formed to be spaced apart from the third surface 3 by a predetermined distance. In addition, the first and second internal electrodes 121 and 122 may be disposed to be spaced apart from the fifth and sixth surfaces 5 and 6 of the body 110.

The conductive metal included in the internal electrodes 121 and 122 may be one or more of Ni, Cu, Pd, Ag, Au, Pt, In, Sn, Al, Ti, and alloys thereof, but the present disclosure is not limited thereto.

An average thickness te of the internal electrodes 121 and 122 is not particularly limited and may vary depending on the purpose. In order to miniaturize the multilayer electronic component 100, the average thickness te of the internal electrodes 121 and 122 may be 0.35 um or less, and in order to improve the reliability of the multilayer electronic component 100 under high temperature and high pressure, the average thickness te of the internal electrodes 121 and 122 may be 3 um or more.

As for the average thickness te of the internal electrodes 121 and 122, with respect to a total of five internal electrode layers including two upper layers and two lower layers based on one internal electrode layer at a point at which a central line of the body in the length direction and a central line of the body in the thickness direction meet among internal electrode layers extracted from an image obtained by scanning a cross-section in the length and thickness directions (L-T) cut at a central portion of the body 110 in the width direction with a scanning electron microscope (SEM), five points including two left points and two right points centered on one reference point at equal intervals are determined based on a point at which the central line of the body in the length direction and the central line of the body in the thickness direction meet, and then thickness at each point may be measured to measure an average value.

The cover portions 112 and 113 may be disposed on upper and lower surfaces of the capacitance formation portion Ac in the first direction.

The cover portions 112 and 113 may basically serve to prevent damage to the internal electrodes due to physical or chemical stress.

The cover portions 112 and 113 may include the same material as the dielectric layer 111. That is, the cover portions 112 and 113 may include a ceramic material, for example, a barium titanate (BaTiO₃)-based ceramic material.

Meanwhile, a thickness of the cover portions 112 and 113 may not be particularly limited. For example, a thickness tc of the cover portions 112 and 113 may each be 20 um or less.

The average thickness tc of the cover portions 112 and 113 may refer to a size in the first direction and may be a value obtained by averaging the sizes of the cover portions 112 and 113 measured at five points at equal intervals above or below the capacitance formation portion Ac.

In addition, margin portions 114 and 115 may be disposed on a side surface of the capacity formation portion Ac.

The margin portions 114 and 115 may include a first margin portion 114 disposed on the fifth surface 5 of the body 110 and a second margin portion 115 disposed on the sixth surface 6. That is, the margin portions 114 and 115 may be disposed on both end surfaces of the ceramic body 110 in the width direction.

As shown in FIG. 3, the margin portions 114 and 115 may refer to a region between both ends of the first and second internal electrodes 121 and 122 in a cross-section of the body 110 cut in the width-thickness (W-T) direction and a boundary surface of the body 110.

The margin portions 114 and 115 may basically serve to prevent damage to the internal electrodes due to physical or chemical stress.

The margin portions 114 and 115 may be formed by forming internal electrodes by applying conductive paste on a ceramic green sheet except for regions in which the margin portions are to be formed.

Meanwhile, a width of the margin portions 114 and 115 may not be particularly limited. For example, an average width of the margin portions 114 and 115 may each be 20 um or less.

The average width of the margin portions 114 and 115 may refer to an average size in the third direction of a region in which the internal electrode 121/122 is spaced apart from the fifth surface 5 and an average size in the third direction of a region in which the internal electrode 121/122 is spaced apart from the sixth surface 6, and may be an average value of sizes of the margin portions 114 and 115 in the third direction measured at five points at equal intervals on the side surface of the capacitance formation portion Ac.

The external electrodes 131 and 132 may be disposed on the third surface 3 and the fourth surface 4, which are surfaces facing each other in the second direction perpendicular to the first direction of the body 110, and may be connected to the internal electrodes 121 and 122. Specifically, the first external electrode 131 may be disposed on the third surface 3, which is one surface facing in the second direction perpendicular to the first direction of the body 110, and may be connected to the first internal electrode 121, and the second external electrode 132 may be disposed on the fourth surface 4, which is the other surface facing in the second direction perpendicular to the first direction of the body 110, and may be connected to the second internal electrode 122.

In the present exemplary embodiment, a structure in which the multilayer electronic component 100 has two external electrodes 131 and 132 is described, but the number and shape of the external electrodes 131 and 132 may change depending on the shape of the internal electrodes 121 and 122 or other purposes.

Meanwhile, the external electrodes 131 and 132 may be formed using any material as long as it has electrical conductivity, such as metal, and a specific material may be determined considering electrical characteristics, structural stability, etc., and may have a multilayer structure.

For example, the external electrodes 131 and 132 may include an electrode layer disposed on the body 110 and a plating layer disposed on the electrode layer.

As a more specific example of the electrode layer, the electrode layer may be a sintered electrode including a conductive metal and glass or may be a resin-based electrode including a conductive metal and a resin.

In addition, the electrode layer may be formed by sequentially forming a sintered electrode and a resin-based electrode on the body. In addition, the electrode layer may be formed by transferring a sheet including a conductive metal onto the body or may be formed by transferring a sheet including a conductive metal onto the sintered electrode.

As the conductive metal included in the electrode layer, any material having excellent electrical conductivity may be used and is not particularly limited. For example, the conductive metal may be one or more of nickel (Ni), copper (Cu), and alloys thereof, and preferably may be copper (Cu) to improve adhesion with the body.

The plating layer plays a role in improving mounting characteristics. The type of the plating layer is not particularly limited and may be a plating layer including one or more of nickel (Ni), tin (Sn), palladium (Pd), and alloys thereof and may be formed of a plurality of layers.

For a more specific example of the plating layer, the plating layer may be a Ni plating layer or a Sn plating layer and may have a form in which a Ni plating layer and a Sn plating layer are formed sequentially on the electrode layer or may have a form in which a Sn plating layer, a Ni plating layer, and a Sn plating layer are formed sequentially. In addition, the plating layer may include a plurality of Ni plating layers and/or a plurality of Sn plating layers.

There is no need to specifically limit the size of the multilayer electronic component 100. For example, the length of the multilayer electronic component 100 may be 0.25 to 5.7 mm, the thickness of the multilayer electronic component 100 may be 0.125 to 3.2 mm, and the width of the multilayer electronic component 100 may be 0.125 to 5.0 mm.

Here, the length of the multilayer electronic component 100 may refer to the maximum size of the multilayer electronic component 100 in the second direction, the thickness of the multilayer electronic component 100 may refer to the maximum size of the multilayer electronic component 100 in the first direction, and, the width of the multilayer electronic component 100 may refer to the maximum size of the multilayer electronic component 100 in the third direction.

In the related art, attempts have been made to improve the bending strength of multilayer electronic components by introducing a conductive resin layer into external electrodes. However, unlike sintered or plated electrodes, the conductive resin layer has a structure in which conductive particles are dispersed in the resin, so when the conductive resin layer is introduced into external electrodes, the side effect of increasing equivalent series resistance (ESR) of multilayer electronic components may occur.

Therefore, in an exemplary embodiment in the present disclosure, the cover portions 112 and 113 including Ba and Ti include the carbon fiber 123, thereby improving the bending strength of the multilayer electronic component 100 without increasing the equivalent series resistance, and even when bending cracks occur, cracks may be prevented from propagating to the capacitance forming portion.

However, the present disclosure does not exclude a case in which the external electrode includes a conductive resin layer, and even when the external electrode includes a conductive resin layer, it is also possible to improve the bending strength of the multilayer electronic component 100 when the cover portions 112 and 113 including Ba and Ti include the carbon fibers 123.

In an exemplary embodiment, the carbon fiber 123 may include one or more of a single-walled carbon nanotube (SWCNT) and a multi-walled carbon nanotube (MWCNT).

The single-walled carbon nanotube (SWCNT) is a material including graphene rolled up in a single tube form, and the multi-walled carbon nanotube (MWCNT) may refer to a case including two or more rolled graphene tubes.

The carbon fiber 123 including one or more of the single-walled carbon nanotubes (SWCNT) and the multi-walled carbon nanotubes (MWCNT) has a high Young's modulus, and thus, when the carbon fiber 123 is included in the cover portions 112 and 113 including Ba and Ti, the bending strength of the multilayer electronic component 100 may be improved.

Meanwhile, when the carbon fiber 123 is the single-walled carbon nanotube (SWCNT), an average diameter of the carbon fiber 123 may be 0.4 nm or more and 4 nm or less, and when the carbon fiber 123 is the multi-walled carbon nanotube (MWCNT), the average diameter of the carbon fibers 123 may be 100 nm or more and 1 um or less. The average diameter of the carbon fiber may be measured through a scanning electron microscope (SEM) in cross-sections in the first and third directions polished in the second direction so that cross-sections of the carbon fibers 123 of the multilayer electronic component 100 are exposed and measured.

Referring to FIG. 6A, the carbon fiber 123 may include a carbon nanotube unit F1. The carbon nanotube unit F1 may refer to the single-walled carbon nanotube (SWCNT) or the multi-walled carbon nanotube (MWCNT). Therefore, the average diameter d1 of the carbon nanotube unit F1 may be 0.4 nm or more and 4 nm or less in the case of single-walled carbon nanotubes (SWCNT) and may be 100nm or more and 1 um or less in the case of multi-walled carbon nanotubes (MWCNT) .

Referring to FIG. 6B, the carbon fiber 123 may be in a form F2 in which a plurality of carbon nanotube units are combined. In this case, as the strength and surface area of the carbon fiber 123 increase, the effect of improving the bending strength of the multilayer electronic component 100 may be further improved.

In FIG. 6B, a plurality of carbon nanotube units are illustrated to be stacked in a cylindrical shape, but the present disclosure is not limited thereto. In other words, the form F2 in which carbon nanotube units are combined is not particularly limited as long as it may form carbon fiber.

Referring to FIG. 2, the cover portions 112 and 113 may include a plurality of carbon fibers 123, and the plurality of carbon fibers 123 may be disposed to be spaced apart from each other in a first direction.

Referring to FIG. 3, the cover portions 112 and 113 may include a plurality of carbon fibers 123, and the plurality of carbon fibers 123 may be disposed to be spaced apart from each other in a third direction.

In sum with reference to FIGS. 2 to 4, it can be confirmed that the cover portions 112 and 113 include a plurality of carbon fibers 123 and the plurality of carbon fibers 123 are disposed to be spaced apart from each other in the first and third directions.

In an exemplary embodiment, the plurality of carbon fibers 123 may be disposed to be spaced apart from each other in the first and third directions. Accordingly, the plurality of carbon fibers 123 may be disposed at high density in the cover portions 112 and 113.

In an exemplary embodiment, each of the plurality of carbon fibers 123 may be continuously disposed in a second direction. Since the second direction is a direction in which the external electrodes 131 and 132 are spaced apart from each other, so the second direction is a direction in which bending stress transmitted to the multilayer electronic component 100 is strong. Accordingly, since each of the plurality of carbon fibers is continuously disposed in the second direction, the effect of improving the bending strength of the multilayer electronic component 100 may be further improved.

In an exemplary embodiment, the carbon fibers 123 may be aligned in the second direction. Accordingly, the effect of improving the bending strength of the multilayer electronic component 100 may be further improved. The fact that the carbon fibers 123 are aligned in the second direction may mean that an angle formed between a straight line connecting the long axes of the carbon fibers 123 and the second direction is 0 degrees or more and tan⁻¹ (average thickness of cover portion/average length of body) degrees or less.

The angle formed between the straight line connecting the long axes of the carbon fibers 123 and the second direction may be measured through a scanning electron microscope (SEM) in cross-sections in the first and second directions polished in the third direction so that the carbon fibers 123 of the multilayer electronic component 100 are exposed.

In addition, the average length of the body 110 may be a value obtained by averaging the size of the body 110 in the second direction measured at five points at equal intervals in the first direction between one end and the other end of the capacitance formation portion Ac in the first direction in the cross-sections in the first and second directions polished to the center of the multilayer electronic component 100 in the third direction.

In an exemplary embodiment, in the Raman spectrum analysis, in the cover portions 112 and 113, a radial breathing mode (RBM) peak distinct from other peaks may be formed in addition to G peak and D peak. The Raman spectrum may be a value measured using a Raman spectrometer LabRam HR-800 manufactured by HORIBA Co., Ltd., Japan. The presence or absence of carbon nanotubes may be confirmed through the Raman spectrum, and the carbon nanotubes may be distinguished from other carbon allotropes.

Specifically, it can be confirmed that, in the cover portions 112 and 113 of the multilayer electronic component 100 according to an exemplary embodiment, peaks are detected even in the RBM, as well as in the D-band and G-band during Raman analysis.

Meanwhile, if the content of carbon included in the carbon fiber 123 is less than 50 moles compared to 100 moles of Ba included in the cover portions 112 and 113, it may be difficult to implement the effect of improving the bending strength.

If the content of carbon included in the carbon fibers 123 exceeds 1000 moles compared to 100 moles of Ba included in the cover portions 112 and 113, it may be difficult to smoothly perform a stacking and compressing process when the cover portions 112 and 113 are formed on the upper or lower surface of the capacitance formation portion Ac, and as a result, mechanical strength of the multilayer electronic component 100 may deteriorate.

Accordingly, in an exemplary embodiment, the content of carbon included in the carbon fibers 123 compared to 100 moles of Ba included in the cover portions 112 and 113 is adjusted to 50 moles or more and 1000 moles or less, thereby preventing deterioration of the mechanical strength of the multilayer electronic component 100 and sufficiently improving the bending strength.

Meanwhile, deterioration in mechanical strength or bending strength of the multilayer electronic component 100 that may occur due to insufficient or excessive carbon content in the carbon fiber 123 compared to 100 moles of Ba included in the cover portions 112 and 113 may become severe when the carbon fiber 123 is the MWCNT. However, according to an exemplary embodiment, by adjusting the content of carbon included in the carbon fiber 123 to 50 mol or more and 1000 mol or less compared to 100 mol of Ba included in the cover portions 112 and 113, the deterioration of mechanical strength of the multilayer electronic component 100 may be prevented and the bending strength may be sufficiently improved, and therefore, even when the carbon fiber 123 is the MWCNT, the bending strength and mechanical strength of the multilayer electronic component 100 may be sufficiently secured.

The method of measuring the content of carbon included in the carbon fiber 123 compared to 100 moles of Ba included in the cover portions 112 and 113 is not particularly limited. For example, the content of carbon included in the carbon fiber 123 compared to 100 moles of Ba included in the cover portions 112 and 113 may be measured by trisecting a region of the cover portions 112 and 113 overlapping the capacitance formation portion Ac in the first direction in the cross-sections in the first and second directions polished to the center of the multilayer electronic component 100, analyzing the composition of elements included in a region of width×length = 15 um × 15 um based on the center of the trisected region through scanning electron microscope-energy dispersive (SEM-EDX), converting the same into the number of moles of carbon compared to 100 moles of Ba, and taking an average value.

Meanwhile, the carbon fiber 123 may have electrical conductivity depending on the structure thereof. Therefore, in an exemplary embodiment, a short circuit between the external electrodes 131 and 132 may be prevented by disposing the carbon fiber 123 to be spaced apart from the external electrodes 131 and 132.

Referring to FIG. 5, the cover portions 112 and 113 according to an exemplary embodiment may include a plurality of dielectric grains G and grain boundaries GB disposed between the plurality of dielectric grains. At this time, the carbon fiber 123 may be disposed on a dielectric including the grains G and the grain boundaries (GB).

Referring to FIG. 7, the carbon fiber 123 may be disposed on the cover portions 112 and 113 disposed on upper and lower surfaces of the region in the first direction in which the dielectric layer 111 and the first and second internal electrodes 121 and 122 are alternately disposed in the first direction. The cover portions 112 and 113 may be formed of a plurality of layers.

The carbon fibers 123 may be aligned and disposed on one surface of a cover sheet to face in the second direction. The method of aligning the carbon fibers 123 on the cover sheet is not particularly limited. For example, before proceeding with a cutting process to form the body 110, in a stacked bar state in which a dielectric green sheet and internal electrode patterns are printed, stacked, and compressed, pre-manufactured carbon fibers may be applied in a predetermined pattern to the cover sheet, and then attached and compressed to the stacked bar. At this time, the carbon fiber may be manufactured in advance using a method, such as chemical vapor deposition (CVD) to have a cylindrical shape.

In an exemplary embodiment, the carbon fiber 123 may be included in the margin portions 114 and 115 as well as in the cover portions 112 and 113. Specifically, the margin portions 114 and 115 may include Ba, Ti, and carbon fiber. Accordingly, the bending strength of the multilayer electronic component 100 may be further improved.

The characteristics of the carbon fiber 123 included in the cover portions may be applied to the carbon fiber included in the margin portions 114 and 115.

Specifically, a plurality of carbon fibers included in the margin portions 114 and 115 may be disposed to be spaced apart from each other in the first or third direction.

In an exemplary embodiment, each of the plurality of carbon fibers included in the margin portions 114 and 115 may be continuously disposed in the second direction.

Meanwhile, an alignment direction of the carbon fibers included in the margin portions 114 and 115 may be the first direction. In this case, a plurality of carbon fibers included in the margin portions 114 and 115 may be disposed to be spaced apart from each other in the second and third directions, and each of the plurality of carbon fibers may be disposed continuously in the first direction.

In an exemplary embodiment, the carbon fibers included in the margin portions 114 and 115 may be disposed to be spaced apart from the external electrodes 131 and 132.

In an exemplary embodiment, an angle formed between a straight line connecting the long axes of the carbon fibers included in the margin portions 114 and 115 and the second direction is 0 degrees or more and tan⁻¹ (average width of margin portion/average thickness of body) degrees or less.

In an exemplary embodiment, the content of carbon included in the carbon fiber may be 50 moles or more and 1000 moles or less compared to 100 moles of Ba included in the margin portion.

One of the various effects of the present disclosure is to improve the bending strength of the multilayer electronic component.

One of the various effects of the present disclosure is to suppress cracks occurring in the cover portion from propagating to the capacitance formation portion.

One of the various effects of the present disclosure is to suppress the side effect of increasing ESR in the process of improving the bending strength of the multilayer electronic component.

While example exemplary embodiments have been shown and described above, it will be apparent to those skilled in the art that modifications and variations could be made without departing from the scope of the present disclosure as defined by the appended claims.

## Claims

1. A multilayer electronic component comprising:
a body including first and second internal electrodes alternately disposed in a first direction with a dielectric layer interposed therebetween and including first and second surfaces facing each other in the first direction, third and fourth surfaces connected to the first and second surfaces and facing each other in a second direction, and fifth and sixth surfaces connected to the first to fourth surfaces and facing each other in a third direction; and
external electrodes disposed on the third and fourth surfaces, respectively,
wherein the body includes a capacitance formation portion in which the first and second internal electrodes overlap in the first direction and cover portions disposed on an upper surface and a lower surface of the capacitance formation portion in the first direction, respectively, and
the cover portions include Ba, Ti, and carbon fiber.

2. The multilayer electronic component of claim 1, wherein the carbon fiber includes one or more of single-walled carbon nanotubes (SWCNT) and multi-walled carbon nanotubes (MWCNT).

3. The multilayer electronic component of claim 1, wherein the carbon fiber is an SWCNT, and an average diameter of the carbon fiber is 0.4 nm or more and 4 nm or less.

4. The multilayer electronic component of claim 1, wherein the carbon fiber is a MWCNT, and an average diameter of the carbon fiber is 100 nm or more and 1 um or less.

5. The multilayer electronic component of claim 1, wherein the carbon fiber includes a carbon nanotube unit.

6. The multilayer electronic component of claim 1, wherein the carbon fiber is a combination of a plurality of carbon nanotube units.

7. The multilayer electronic component of claim 1, wherein the cover portions include a plurality of carbon fibers, and the plurality of carbon fibers are disposed to be spaced apart from each other in the first direction and the third direction.

8. The multilayer electronic component of claim 1, wherein the cover portions include a plurality of carbon fibers, and each of the plurality of carbon fibers is configured as a single unit.

9. The multilayer electronic component of claim 1, wherein
the cover portions include a plurality of carbon fibers, and
each of the plurality of carbon fibers is continuously disposed in the second direction.

10. The multilayer electronic component of claim 1, wherein the carbon fiber is disposed to be spaced apart from the external electrode.

11. The multilayer electronic component of claim 1, wherein an angle between a straight line connecting long axes of the carbon fibers and the second direction is 0 degrees or more and tan⁻¹ (average thickness of cover portion/average length of body) degrees or less.

12. The multilayer electronic component of claim 1, wherein a content of carbon included in the carbon fiber compared to 100 moles of Ba included in the cover portions is 50 moles or more and 1000 moles or less.

13. The multilayer electronic component of claim 1, wherein the body includes margin portions disposed on one surface and a side surface of the capacity formation portion in the third direction, respectively, and
the margin portions include Ba, Ti, and carbon fiber.
